# FASCICULE DE BREVET EUROPEEN

(11) **EP 1 494 153 B1**
(45) Date de publication et mention de la délivrance du brevet: **28.09.2005**
(21) Numéro de dépôt: 03291675.1
(22) Date de dépôt: 04.07.2003
(51) Int. Cl.: G06F 17/60, G06F 9/445, H04Q 7/22, H04L 29/08

(54) **Procédé de lancement d'un opérateur de traitement d'objets contenus dans un message multimédia et terminal de télécommunication associé**
Verfahren zum Starten eines Operators zur Multimedianachrichtenobjektbearbeitung und entsprechendes Endgerät
Process of launching an operator for processing multimedia message objects and terminal thereof

(43) Date de publication de la demande: 05.01.2005
(73) Titulaire: FRANCE TELECOM, 75015 Paris (FR)
(72) Inventeur: Potier, Aline, 92160 Antony (FR); Chevrot, Pascal, 75015 Paris (FR); Bellordre, Philippe, 75015 Paris (FR)
(74) Mandataire: Fréchède, Michel

(56) Documents cités:
- EP-A- 1 117 230
- EP-A- 1 182 600
- EP-A- 1 255 416
- WO-A-02/17068
- US-B1- 6 546 554
- FREED N ET AL: "Multipurpose Internet Mail Extensions (MIME) Part Two: Media Types, RFC 2046" INTERNET ARTICLE, novembre 1996 (1996-11), XP001022150 Extrait de l'Internet: <URL:http://www.oac.uci.edu/indiv/ehood/MI ME/2046/rfc2046.html> [extrait le 2001-10-29]
- ETSI / 3GPP: "ETSI TS 123 140 V5.7.0 Digital cellular telecommunications system (Phase 2+); Universal Mobile Telecommunications System (UMTS); Multimedia Messaging Service (MMS); Functional description; Stage 2" INTERNET ARTICLE, [en ligne] juin 2003 (2003-06), pages 1-159, XP002261452 Extrait de l'Internet: <URL:http://webapp.etsi.org/action%5CPU/20 030708/ts_123140v050700p.pdf> [extrait le 2003-11-13]

## Description

L'invention est relative au domaine des télécommunications et plus particulièrement au service de messagerie multimédia.

Les services de messagerie multimédia sont répandus et offrent la possibilité d'envoyer et de recevoir des messages multimédias de grandes tailles contenant du texte et/ou des images et/ou du son et/ou de la vidéo. Ce service peut être déployé sur un réseau mobile, par exemple GSM, GPRS ou UMTS, ou sur un réseau fixe filaire ou non.

Le service de messagerie multimédia est assuré par un serveur de messagerie multimédia qui permet l'envoi et la réception de messages multimédias depuis tous dispositifs comportant un moyen de communication avec ce serveur de messagerie multimédia et un moyen de composition et de lecture des messages multimédias, usuellement appelé module client MMS.

En particulier, un terminal de télécommunication intégrant un module client multimédia MMS peut composer, présenter, envoyer et recevoir des messages multimédias MMS.

Classiquement, un message multimédia envoyé par un terminal émetteur abonné est d'abord transmis au serveur de messagerie multimédia, puis, il est téléchargé du serveur vers le terminal du destinataire abonné.

Classiquement, un message multimédia reçu est composé d'une entête contenant entre autre une information de provenance du message, de destination du message, de contenu et de date du message. Il comprend également un ou plusieurs éléments ou objets multimédias. Chaque objet multimédia est composé de données sous forme de texte et/ou de son et/ou d'image et/ou de vidéo.

Il est connu par le document EP 1 255 416, un procédé d'enregistrement de messages multimédias sur un support d'enregistrement. Ce support est connecté au terminal de communication d'un utilisateur de sorte que lorsque celui-ci perd ou détériore son terminal, les messages multimédias qui lui sont destinés sont automatiquement transférés vers le nouveau terminal de l'utilisateur.

Par ailleurs, il est connu par le document EP 1 117 230 un procédé pour former un modèle de présentation en langage SMIL pour présenter les informations sur un terminal multimédia.

Le document ETSI\3GPP : «ETSI TS 123 140 V5.7.0 » décrit l'architecture d'un service de messagerie multimédia MMS et le document "Multipurpose Internet Mail Extensions (MIME) Part Two : Media Types, RFC 2046" décrit un protocole standard d'intemet.

Par ailleurs, le besoin apparaît de communiquer des messages multimédias plus évolués appelés par la suite messages multimédias enrichis. Ces messages enrichis contiennent des objets d'un type différent des objets des messages multimédias classiques. Ces messages enrichis ne sont pas supportés par un standard de message multimédia MMS au contraire du son, de la vidéo ou de l'image. Ainsi, un message enrichi peut comporter un ou plusieurs objets d'un type tel qu'un applicatif, un logiciel exécutable, un chemin d'accès pointant vers des fichiers stockés soit sur un serveur d'un réseau de communication, soit en local dans une mémoire du terminal de l'utilisateur destinataire.

Le terme applicatif désigne tout type d'objet normalisé ou non pouvant être intégré dans un message multimédia MMS comme par exemple du texte, de l'image, de la vidéo, du son, un vecteur graphique svg ou flash ou une application Java.

Bien que les serveurs multimédias soient adaptés pour traiter ces messages enrichis, il n'est actuellement pas possible de lire ce type de message sur un terminal de télécommunication intégrant un module client multimédia MMS.

En effet, les modules clients MMS des terminaux actuels ne permettent pas de reconnaître ces objets et de déclencher automatiquement les actions nécessaires à leur gestion.

En conséquence, lorsqu'un utilisateur destinataire reçoit un message enrichi, il doit réaliser les commandes de traitement de celui-ci.

Par exemple, lorsqu'un utilisateur destinataire reçoit un message contenant une adresse URL pointant vers un fichier vidéo, l'utilisateur destinataire doit se connecter à Internet et aller rechercher cette vidéo à l'adresse URL reçue dans le message.

Le but de la présente invention est de trouver un procédé permettant de lancer, d'exécuter, d'afficher et/ou de jouer les objets contenus dans des messages enrichis sur un terminal d'un utilisateur destinataire sans nécessiter une quelconque intervention de sa part.

Pour résoudre ce problème, la présente invention propose un procédé de lancement d'un opérateur de traitement d'au moins un objet contenu dans un message réceptionné par un terminal de télécommunication équipé d'un module client multimédia et d'opérateurs de traitement d'objets multimédias, caractérisé en ce qu'il comporte les étapes suivantes:
- reconnaissance, par le module client multimédia, du type de l'objet contenu dans le message réceptionné et identification d'un opérateur de traitement apte à traiter ledit objet en fonction de son type, et
- transmission d'informations concernant l'objet par un module de lancement vers l'opérateur de traitement identifié, et
- transmission d'un message d'accusé de réception comportant une indication d'acceptation ou de non acceptation de traitement de l'opérateur de traitement identifié vers le module client multimédia, et sur acceptation,
- transmission de l'objet du client multimédia vers l'opérateur de traitement identifié, pour lancement du traitement de celui-ci.

Grâce à ce procédé, l'utilisateur récepteur d'un message enrichi contenant un objet par exemple de type adresse peut visualiser/écouter les données de ce fichier même si ce fichier n'est pas directement embarqué dans le message réceptionné.

De plus, ce procédé permet l'ouverture et l'exécution immédiate de tout applicatif et logiciel exécutable reçu par message enrichi sur un terminal de télécommunication.

Cette invention permet à toute personne non spécialiste de recevoir simplement des contenus plus riches.

En conséquence, cette invention augmente l'ergonomie et la convivialité du service rendu par le service de messagerie multimédia.

La présente invention propose également un terminal de télécommunication apte à recevoir un message contenant au moins un objet d'un type donné, le terminal comportant un module client multimédia et des opérateurs de traitement d'objets contenus dans les messages multimédias, caractérisé en ce que :
- le module client multimédia comporte des moyens d'identification d'un opérateur de traitement apte à traiter ledit objet en fonction de son type, et des moyens de transmission de cet objet vers l'opérateur de traitement identifié, pour lancement du traitement de celui-ci ;
- l'opérateur de traitement identifié comporte des moyens de transmission d'un message d'accusé de réception contenant une indication d'acceptation ou de non acceptation de traitement,
et en ce que le terminal comporte un module de lancement d'opérateurs de traitement comportant des moyens de transmission d'informations concernant l'objet à l'opérateur de traitement identifié pour engendrer un code d'appel d'une opération de traitement de cet objet

L'invention conceme également un programme d'ordinateur comportant des instructions pour l'exécution des étapes du procédé de lancement d'un opérateur de traitement selon l'une quelconque des revendications de 1 à 9, lorsque le programme est exécuté sur un ordinateur.

L'invention sera mieux comprise à la lecture de la description qui va suivre, donnée à titre d'exemple non limitatif et, en référence aux figures sur lesquelles :
- la figure 1 est une vue synoptique de l'architecture d'un terminal de télécommunication selon l'invention,
- la figure 2 est un diagramme récapitulant les différentes étapes du procédé selon un exemple de réalisation de l'invention.

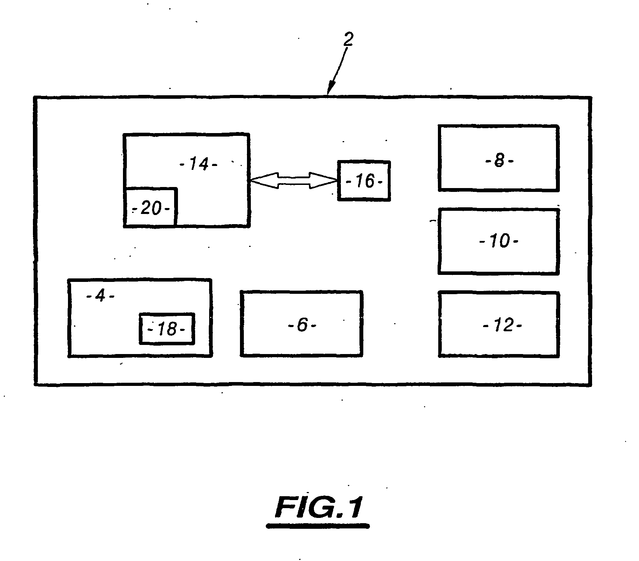

La figure 1 représente un terminal de télécommunication 2 selon l'invention. Ce terminal comprend des moyens de stockage 4 de données, une interface homme/machine 6, des opérateurs de traitement d'objets multimédias 8, 10, 12, un module client multimédia MMS 14 et un module 16 de lancement des opérateurs de traitement.

Les moyens de stockage 4 de données sont constitués par une mémoire non volatile de type ROM (Read Only Memory), EEPROM (Electrically Erasable Programmable Read Only Memory) ou équivalent. Cette mémoire a généralement une capacité supérieure à 500 koctets et peut par exemple stocker des messages multimédias 18.

Classiquement, l'interface homme/machine 6 comprend un récepteur, un microphone, un clavier et un écran d'affichage d'image et/ou de texte par exemple à cristaux liquide.

Les opérateurs de traitement d'objets contenus dans des messages multimédias sont également appelés applications ou afficheurs/joueurs. Ces opérateurs sont aptes à afficher, jouer, éditer des fichiers multimédias et à exécuter des logiciels exécutables ou des applicatifs. Ils peuvent comprendre notamment un lecteur audio, un lecteur vidéo, un afficheur d'image, un logiciel de gestion d'application Java AMS (Application Management Software) etc.

Ils sont chacun compatibles avec certains formats de fichiers mulimédias. Les formats des fichiers multimédias peuvent être soit de type propriétaires (flash), soit standards et normalisés par les groupes de normalisation 3GPP, IETF, W3C et OMA, au sein du groupe définissant les différents codecs utilisés pour les services mobiles.

Le module client multimédia 14 est un moyen de communication, de composition et de lecture des messages multimédias envoyés par un serveur de messagerie multimédia.

Ce module client 14 est apte à envoyer à un opérateur de traitement préalablement sélectionné, un objet contenu dans le message réceptionné pour traitement de celui-ci.

Avantageusement, le module client multimédia est apte à échanger des données avec une unité éditeur SMIL 20 pour lire et interpréter un code de description du contenu d'un message multimédia selon le langage SMIL.

Le langage SMIL (Synchronised Multimedia Integration Language) permet de synchroniser des fichiers de nature différente pour constituer des messages multimédias. Ce langage est normalisé par l'organisme W3C et adapté aux réseaux et services mobiles dans le forum OMA, au 3GPP et à travers le document de conformité MMS notamment tel que décrit dans les différentes versions du document "MMS Conformance Document " spécifié par le forum OMA. (V2.0, 06 février 2002 à l'adresse http://www.openmobilealliance.org).

Par ailleurs, une description du langage SMIL est disponible à l'adresse suivante : « Synchronised Multimedia Integration Language (SMIL) Boston Specification », W3C, Working Draft SMIL 2.0 07 august 2001 URI : http://www.w3c.org/TR/smil20/.

Classiquement, le langage SMIL est utilisé pour coder le contenu des messages dans des balises. Les balises (tag) sont constituées d'une directive sous forme de mots clés encadrés par des signes inférieurs à (<) et supérieurs à (>) mettant en forme un texte pour indiquer les caractéristiques d'affichage d'un document.

La balise d'un fichier est indicative du type de fichier tandis que l'extension d'un fichier détermine le format de celui-ci. Par exemple, une balise notée « <vidéo/> »définit des données de type vidéo qui peuvent être enregistrées avec les extensions suivantes : ".mp4" ; ".rm" ; ".avi" ; ".asf" etc.

Parrallèlement, les balises <audio/>, <img/>, <animation/>, <a/> définissent respectivement des fichiers de type audio par exemple d'extension ".mp3" ou ".mid", des fichiers de type image d'extension ".gif", ".png" ou ".jpg" ; des fichiers de type animation d'extension ".swf" ou ".svg" et des fichiers hyperliens d'extension ".html".

Par ailleurs, les fichiers de nature diverse, non identifiés par les autres balises sont définis par une balise notée <ref/>. Avantageusement, selon l'invention, cette balise <ref/> est utilisée pour décrire un objet par exemple de type logiciel exécutable.

En conséquence, le module client MMS 14 aidé de l'unité éditeur SMIL 20 est apte à analyser la balise ainsi que l'extension de fichier d'un objet contenu dans un message réceptionné par un terminal de télécommunication pour identifier l'opérateur de traitement 8, 10, 12 ou joueur/éditeur implanté dans le terminal adapté à la mise en oeuvre de l'exécution, l'affichage, la lecture de l'objet en question.

Le module de lancement 16 des opérateurs de traitement 8, 10, 12 est apte à envoyer à l'opérateur de traitement identifié 8 des informations concernant le contenu de l'objet d'un message afin que celui-ci confirme sa capacité à traiter cet objet.

Pratiquement, ce module de lancement 16 utilise une interface connue usuellement appelée APl « Application Programming Interface » qui permet de faire des requêtes à un système d'exploitation, à un opérateur de traitement ou à une autre application.

De plus, le module de lancement 16 est également apte à déclencher automatiquement le lancement d'une procédure de traitement appropriée par l'opérateur de traitement identifié 8 sans aucune intervention de l'utilisateur destinataire sur son terminal.

En outre, avantageusement, lorsqu'un objet du message comporte une adresse, le module de lancement est apte à rechercher le fichier multimédia stocké à cette adresse, à analyser le type de ce fichier et à identifier l'opérateur de traitement adapté au traitement de ce fichier.

Avantageusement, ce fichier peut être stocké sur un serveur de messagerie d'un réseau de communication tel que qu'un réseau de télécommunication ou un réseau Internet. En variante, ce fichier peut être stocké localement dans la mémoire 4 du terminal 2 de l'utilisateur destinataire.

Pour gérer le lancement d'un opérateur de traitement approprié, le module de lancement 16 est apte à communiquer à l'opérateur identifié 8 des informations concernant notamment le type et la nature de l'objet à traiter. Ces informations peuvent être regroupées selon trois critères ou paramètres. Le premier paramètre, appelé EMPLACEMENT comprend le nom de l'objet ainsi que le cas échéant le chemin pour y accéder. Le second paramètre appelé ATTRIBUT DU CONTENU décrit le contenu et les caractéristiques de l'objet. Ce paramètre comprend par exemple la taille du fichier, le nom du serveur où il est stocké, le procédé utilisé, les ports utilisés etc. Le troisième paramètre appelé DEFINITION DE LA FENETRE indique la taille et la position de la fenêtre de visualisation de l'objet sur l'écran 6 du terminal. -

A titre d'exemple, si le message comporte une adresse d'un fichier Java stocké localement sur la mémoire 4 du terminal de télécommunication 2, dans ce cas, le paramètre EMPLACEMENT peut par exemple être « javaappli.jad ». Le paramètre ATTRIBUT DU CONTENU n'est pas utilisé. L'opérateur de traitement identifié est un logiciel de type AMS. Ce logiciel est apte à gérer le téléchargement, le stockage, l'exécution et l'effacement d'applicatif Java.

Les opérateurs de traitement, le module client multimédia 14, l'unité éditeur 20 et le module de lancement 16 peuvent être implémentés en hardware sur un microcontrôleur ou en software sur un support logiciel ou un composant programmé exécuté par un microprocesseur à partir d'une mémoire non volatile.

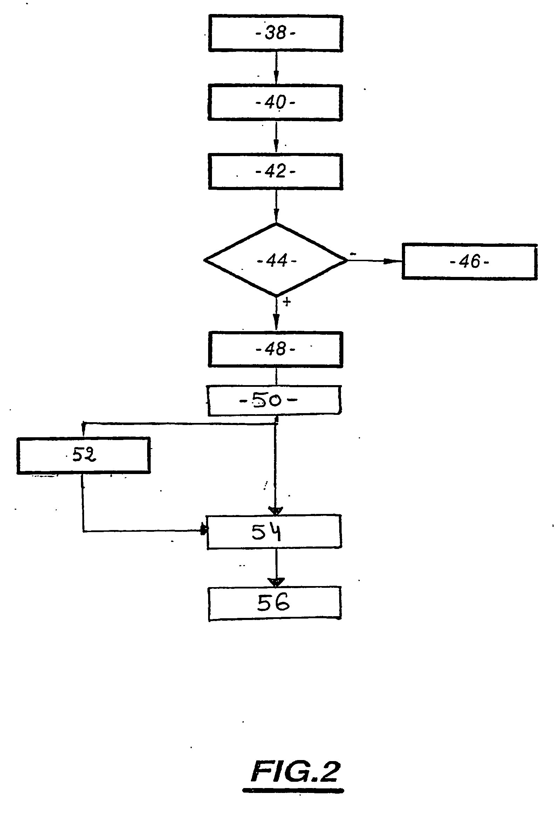

La figure 2 est un diagramme représentatif des différentes étapes du procédé du lancement d'un opérateur de traitement selon l'invention.

Selon une première étape 38 de ce procédé, l'unité éditeur SMIL 20 aidé du client multimédia MMS 14 reconnaît le ou les objets contenus dans un message réceptionné sur le terminal de télécommunication de l'utilisateur. Ce message est défini par exemple par une balise de type <vidéo src = "vidéo1.mp4>. Il contient donc un objet de type vidéo avec une extension ".mp4".

Lors d'une étape 40, le client multimédia MMS 14 aidé de l'unité éditeur SMIL 20 identifie l'opérateur de traitement apte à traiter l'objet contenu dans ce message. Ainsi, dans l'exemple précédent, il identifie parmi les opérateurs de traitement 8, 10, 12 implémentés dans le terminal de télécommunication 2, un opérateur de traitement 8 de type lecteur vidéo compatible avec le format .mp4.

Au cours d'une étape 42, le module de lancement 16 gère la transmission d'informations concernant la nature ou le type de l'objet du message, du client multimédia MMS 14 vers l'opérateur de traitement 8 identifié et choisi par l'éditeur SMIL 20 en association avec le module client multimédia.

Si par exemple, le message comporte une adresse de type URI « Uniform Resource Identifier », les informations envoyées peuvent par exemple comporter un paramètre EMPLACEMENT égale à : « rtsp://here.isaexemple.com :554/video.mp4 » et un paramètre ATTRIBUT DU CONTENU contenant des informations concernant la version du protocole utilisée, le nom du créateur et l'identification de sa session de communication, le nom de cette session, une adresse électronique e-mail, les connexions, la bande passante, une adresse de transport et un nom de média, le temps actif de la session, une description de l'URI, des paramètres de contrôle, de profil, d'étendue, de fmtp et de rtpmap de l'objet à traiter.

Pendant une étape 44, l'opérateur de traitement identifié 8 analyse ces informations, et transmet au module de lancement 16 un message d'acceptation de traitement ou de non acceptation de traitement. Ce message noté NOTIFICATION D'EVENEMENT correspond par exemple à un caractère booléen.

Si le module de lancement 16 reçoit un message de refus de traitement du message, le client multimédia MMS14 reprend la main au cours d'une étape 46 pour, soit identifier un autre opérateur de traitement adapté à traiter le message ou soit informer l'utilisateur de l'absence d'opérateur approprié à la lecture ou l'exécution de l'objet contenu dans le message réceptionné.

Si le module de lancement reçoit un message d'acceptation, il demande au client multimédia MMS 14 d'envoyer l'objet du message à l'opérateur de traitement 8 qui a envoyé un message d'acceptation. Ainsi, le module multimédia MMS 14 transmet, lors d'une étape 48, l'objet contenu dans le message pour traitement de celui-ci.

Avantageusement, l'opérateur de traitement 8 peut renvoyer un message booléen de confirmation de prise en charge de l'objet et de traitement de celui-ci lors d'une étape 50.

Lorsque le message est un fichier exécutable ou un applicatif, le module de lancement 16 déclenche, pendant l'étape 54, le lancement du traitement du fichier par l'opérateur de traitement 8 sans aucune intervention de l'utilisateur du terminal.

Lorsque l'objet du message est un chemin d'accès d'un fichier stocké localement dans la mémoire 4 du terminal 2 ou est un hyperlien, le module de lancement 16 recherche cet objet multimédia sans intervention de l'utilisateur pendant une étape 52.

Lorsque l'objet du message est stocké sur un réseau de télécommunication ou sur un réseau Internet, cet objet peut soit être téléchargé sur la mémoire 4 du terminal 2 de télécommunication, soit être lu en transit (streaming audio ou vidéo) pour éviter les retards liés à un téléchargement.

Après téléchargement ou après découverte du fichier à lire en transit, le module de lancement 16 déclenche le traitement du message par l'opérateur de traitement 8 pendant une étape 54.

Une fois l'objet du message traité ou en cas d'interruption de traitement, l'opérateur de traitement 8 envoie avantageusement un message booléen de fin de prise en charge ou d'erreur en cours d'exécution de l'objet contenu dans le message réceptionné sur le terminal de télécommunication.

Enfin au cours d'une étape 56, le module de lancement 16 redonne la main au client multimédia MMS 14 pour poursuivre la gestion et la présentation des objets contenus dans le message réceptionné.

Avantageusement selon l'invention, les messages enrichis peuvent contenir un ou plusieurs objets. Ces objets peuvent être stockés dans le réseau, dans la mémoire du terminal ou encore embarqués dans le message multimédia.

## Revendications

1. Procédé de lancement d'un opérateur de traitement d'au moins un objet contenu dans un message réceptionné par un terminal de télécommunication (2) équipé d'un module client multimédia MMS (14) et d'opérateurs de traitement d'objets multimédias (8, 10, 12), comportant les étapes suivantes:
- reconnaissance (38), par le module client multimédia (14) et par une unité éditeur SMIL (20), du type de l'objet contenu dans le message réceptionné et identification (40) d'un opérateur de traitement (8) apte à traiter ledit objet en fonction de son type, et
- transmission d'informations (42) concernant l'objet par un module de lancement (16) d'opérateurs de traitement vers l'opérateur de traitement identifié (8), et
- transmission (44) d'un message d'accusé de réception comportant une indication d'acceptation ou de non acceptation de traitement de l'opérateur de traitement identifié (8) vers le module client multimédia (14), et sur acceptation,
- transmission (48) de l'objet du client multimédia MMS (14) vers l'opérateur de traitement identifié (8), pour lancement du traitement (54) de celui-ci.

2. Procédé de lancement d'un opérateur de traitement d'un objet selon la revendication 1, **caractérisé en ce que**, sur réponse d'acceptation de traitement, il comprend en outre une étape de transmission d'un message (50) de prise en charge et d'exécution de traitement de l'opérateur de traitement identifié (8) vers le module client multimédia MMS (14).

3. Procédé de lancement d'un opérateur de traitement d'un objet selon l'une quelconque des revendications précédentes **caractérisé en ce qu'**il comprend une étape (56) de retour au module client multimédia MMS (14) après traitement dudit objet réalisé par l'opérateur de traitement identifié.

4. Procédé de lancement d'un opérateur de traitement d'un objet selon l'une quelconque des revendications précédentes **caractérisé en ce que**, en cas d'interruption d'exécution du traitement d'un objet d'un message, et à la fin de l'exécution du traitement d'un message, il comprend une étape de transmission, soit d'un message d'erreur, soit d'un message de fin de prise en charge.

5. Procédé de lancement d'un moyen de traitement selon l'une quelconque des revendications précédentes, **caractérisé en ce que** les informations concernant l'objet contenu dans le message réceptionné comprennent au moins :
- la localisation de l'objet, et/ou
- des paramètres définissant l'objet, et/ou
- des caractéristiques de la fenêtre de visualisation de l'objet.

6. Procédé de lancement d'un opérateur de traitement selon l'une quelconque des revendications précédentes, **caractérisé en ce qu'**il comprend une étape de recherche (52) d'un fichier stocké sur un serveur d'un réseau de communication lorsque l'objet du message comprend un hyperlien pointant vers ce fichier.

7. Procédé de lancement d'un opérateur de traitement selon la revendication 6 **caractérisé en ce qu'**il comprend une étape de lecture en transit du fichier stocké sur un serveur d'un réseau de communication.

8. Procédé de lancement d'une application de traitement selon la revendication 6 **caractérisé en ce qu'**il comprend une étape de téléchargement du fichier stocké sur un serveur d'un réseau de communication.

9. Procédé de lancement d'une application de traitement selon l'une quelconque des revendications 1 à 5, **caractérisé en ce qu'**il comprend une étape de recherche (52) d'un fichier stocké dans une mémoire (4) du terminal (2) lorsque l'objet du message comprend un chemin d'accès local pointant vers ce fichier.

10. Terminal de télécommunication apte à recevoir un message contenant au moins un objet d'un type donné, le terminal (2) comportant un module client multimédia MMS (14) et des opérateurs de traitement (8, 10, 12) de messages multimédias, tel que
- le module client multimédia MMS (14) comporte des moyens d'identification (20) d'un opérateur de traitement (8, 10, 12) apte à traiter ledit objet en fonction de son type, et des moyens de transmission de cet objet vers l'opérateur de traitement identifié, pour lancement du traitement de celui-ci ; **caractérisé en ce que**:
- l'opérateur de traitement identifié (8, 10, 12) comporte des moyens de transmission d'un message d'accusé de réception contenant une indication d'acceptation ou de non acceptation de traitement, et **en ce que** le terminal (2) comporte :
- un module de lancement (16) d'opérateurs de traitement comportant des moyens de transmission d'informations concernant l'objet à l'opérateur de traitement identifié pour engendrer un code d'appel d'une opération de traitement de cet objet.

11. Terminal de télécommunication selon la revendication 10 **caractérisé en ce qu'**il comprend des moyens de stockage (4) aptes à stocker au moins un message contenant au moins un objet de type :
- adresse URI pointant vers des fichiers multimédias stockés sur un réseau de communication, et/ou
- adresse pointant vers des fichiers multimédias stockés dans les moyens de stockage (4) du terminal.

12. Terminal de télécommunication selon l'une quelconque des revendications 10 et 11, **caractérisé en ce qu'**il comprend des moyens de stockage (4) aptes à stocker au moins un message contenant au moins un objet de type applicatif ou logiciel exécutable.

13. Programme d'ordinateur comportant des instructions pour l'exécution des étapes du procédé de lancement d'un opérateur de traitement selon l'une quelconque des revendications de 1 à 9, lorsque le programme est exécuté sur un ordinateur.

## Patentansprüche

1. Verfahren zum Starten eines Operators bzw. einer Einrichtung zur Datenbearbeitung für mindestens ein Objekt, welches in einer von einem Telekommunikationsendgerät (2) empfangenen Nachricht enthalten ist, das mit einem Multimedia-Kundenmodul MMS (14) und mit Datenbearbeitungseinrichtungen (8, 10, 12) für Multimediaobjekte ausgerüstet ist, mit den folgenden Verfahrensschritten:
- Erkennen (38) des Typs des in der empfangenen Nachricht enthaltenen Objekts durch das Multimedia-Kundenmodul (14) und durch eine Editoreinheit SMIL (20) und Identifizieren (40) einer Datenbearbeitungseinrichtung (8), die zur Verarbeitung des Objekts in Abhängigkeit seines Typs geeignet ist; und
- Übertragen (42) von Informationen, welche das Objekt betreffen, durch ein Startmodul (16) der Datenbearbeitungseinrichtungen an die identifizierte Datenbearbeitungseinrichtung (8); und
- Übertragen (44) einer Empfangsbestätigungsnachricht an das Multimedia-Kundenmodul (14), welche eine Anzeige einer Annahme oder keiner Annahme zur Verarbeitung der identifizierten Datenbearbeitungseinrichtung (8) aufweist; und bei Annahme
- Übertragen (48) des Objekts des Multimedia-Kundenmoduls MMS (14) an die Datenbearbeitungseinrichtung (8) zum Beginnen der Verarbeitung dieses Objekts.

2. Verfahren zum Starten einer Datenbearbeitungseinrichtung für mindestens ein Objekt nach Anspruch 1, **dadurch gekennzeichnet, dass** es für Annahme der Verarbeitung weiterhin einen Verfahrensschritt Übertragen (50) einer Nachricht einer Übernahme und Ausführung der Verarbeitung der Datenbearbeitungseinrichtung (8) an das Multimedia-Kundenmodul MMS (14) aufweist.

3. Verfahren zum Starten einer Datenbearbeitungseinrichtung für mindestens ein Objekt nach einem der vorhergehenden Ansprüche, **dadurch gekennzeichnet, dass** es einen Verfahrensschritt (56) Rückkehren zum Multimedia-Kundenmodul MMS (14) nach Verarbeitung des Objekts aufweist, welche von der Datenbearbeitungseinrichtung durchgeführt wurde.

4. Verfahren zum Starten einer Datenbearbeitungseinrichtung für mindestens ein Objekt nach einem der vorhergehenden Ansprüche, **dadurch gekennzeichnet, dass** es für den Fall einer Unterbrechung der Ausführung der Verarbeitung eines Objekts einer Nachricht und am Ende der Ausführung der Verarbeitung einer Nachricht einen Verfahrensschritt Übertragen von entweder einer Fehlemachricht oder einer Nachricht des Übernahmeendes aufweist.

5. Verfahren zum Starten einer Datenbearbeitungseinrichtung für mindestens ein Objekt nach einem der vorhergehenden Ansprüche, **dadurch gekennzeichnet, dass** die Informationen, welche das in der empfangenen Nachricht enthaltene Objekt betreffen, mindestens Folgendes aufweisen:
- die Lokalisierung des Objekts; und/oder
- Parameter, welche das Objekt festlegen; und/oder
- Eigenschaften des Sichtfensters des Objekts.

6. Verfahren zum Starten einer Datenbearbeitungseinrichtung nach einem der vorhergehenden Ansprüche, **dadurch gekennzeichnet, dass** es einen Verfahrensschritt Suchen (52) einer gespeicherten Datei in einem Server eines Kommunikationsnetzes aufweist, wenn das Objekt der Nachricht einen Hyperlink enthält, der auf diese Datei zeigt.

7. Verfahren zum Starten einer Datenbearbeitungseinrichtung nach Anspruch 6, **dadurch gekennzeichnet, dass** es einen Verfahrensschritt Lesen im Durchgang der gespeicherten Datei auf einem Server eines Kommunikationsnetzes aufweist.

8. Verfahren zum Starten einer Datenbearbeitungsanwendung nach Anspruch 6, **dadurch gekennzeichnet, dass** es einen Verfahrensschritt Laden der gespeicherten Datei auf einem Server eines Kommunikationsnetzes aufweist.

9. Verfahren zum Starten einer Datenbearbeitungsanwendung nach einem der Ansprüche 1 bis 5, **dadurch gekennzeichnet, dass** es einen Verfahrensschritt Suchen (52) einer in einem Speicher (4) des Endgeräts (2) aufweist, wenn das Objekt der Nachricht einen Weg eines lokalen Zugriffs enthält, der auf die Datei verweist.

10. Telekommunikationsendgerät, welches zum Empfang einer Nachricht geeignet ist, die mindestens ein Objekt eines vorgegebenen Typs enthält, wobei das Endgerät (2) ein Multimedia-Kundenmodul MMS (14) und Datenbearbeitungseinrichtungen (8, 10, 12) für Multimedianachrichten aufweist, wobei
- das Multimedia-Kundenmodul MMS (14) Identifikationseinrichtungen (20) für eine Datenbearbeitungseinrichtung (8, 10, 12), die zur Verarbeitung des Objekts in Abhängigkeit seines Typs geeignet sind, und Übertragungseinrichtungen für dieses Objekt an die identifizierte Datenbearbeitungseinrichtung zum Start der Verarbeitung dieses Objekts aufweist;
**dadurch gekennzeichnet, dass**
- die identifizierte Datenbearbeitungseinrichtung (8, 10, 12) Übertragungseinrichtungen für eine Empfangsbestätigungsnachricht aufweist, welche eine Anzeige einer Annahme oder keiner Annahme der Verarbeitung enthält, und dass das Endgerät (2) Folgendes aufweist:
- ein Startmodul (16) der Datenbearbeitungseinrichtungen mit Übertragungseinrichtungen für das Objekt betreffende Informationen an die identifizierte Datenbearbeitungseinrichtung zur Erzeugung eines Aufrufkodes eines Verarbeitungsvorgangs dieses Objekts.

11. Telekommunikationsendgerät nach Anspruch 10, **dadurch gekennzeichnet, dass** es Speichereinrichtungen (4) aufweist, welche zur Speicherung von mindestens einer Nachricht geeignet sind, die mindestens ein Objekt folgenden Typs aufweist:
- Adresse URI, welche auf Multimediadateien verweist, die in einem Kommunikationsnetz gespeichert sind; und/oder
- Adresse, welche auf Multimediadateien verweist, die in den Speichereinrichtungen (4) des Endgeräts gespeichert sind.

12. Telekommunikationsendgerät nach einem der Ansprüche 10 und 11, **dadurch gekennzeichnet, dass** es Speichereinrichtungen (4) aufweist, welche zur Speicherung von mindestens einer Nachricht geeignet sind, die mindestens ein Objekt eines Anwendungstyps oder einer ausführbaren Software aufweist.

13. Computerprogramm, welches Befehle zur Ausführung der Verfahrensschritte des Verfahrens zum Starten einer Datenbearbeitungseinrichtung nach einem der Ansprüche 1 bis 9 aufweist, wenn das Programm auf einem Computer ausgeführt wird.

## Claims

1. A method of launching an operator for processing an object contained in a message received by a telecommunication terminal (2) including an MMS client module (14) and operators (8, 10, 12) for processing multimedia objects, the method including the following steps:
- recognition (38), by the multimedia client module (14) and by an SMIL editor unit (20), of the type of object concained in the received message and identification (40) of a processing operator (8) adapted to process said object as a function of the type thereof,
- transmission (42) to the identified processing operator (8) of information concerning the object by a module (16) for launching processing operators, and
- transmission (44) from the identified processing operator (8) to the multimedia client module (14) of an acknowledgement message including an indication of acceptance or non-acceptance of processing, and in the event of acceptance of processing:
- transmission (48) of the object from the MMS client module (14) to the identified processing operator (8) to launch the processing (54) thereof.

2. A method according to claim 1 of launching an object processing operator, **characterised in that**, in the event of acceptance of processing, it further includes a step (50) of transmission of a taking on and execution of processing message from the identified processing operator (8) to the MMS client module (14).

3. A method according to either preceding claim of launching an object processing operator, **characterised in that** it includes a step (56) of returning to the MMS client module (14) after processing of said object by the identified processing operator.

4. A method according to any one of the preceding claims of launching a processing operator, **characterised in that**, in the event of interruption of execution of the processing of an object of a message and at the end of execution of the processing of a message, it includes a step ef transmission of either an error message or an end of taking on message.

5. A method according to any one of the preceding claims of launching processing means, **characterised in that** the information concerning the object contained in the received message includes:
- the location of the object, and/or
- parameters defining the object, and/or
- characteristics of the display window of the object.

6. A method according to any one of the preceding claims of launching a processing operator, **characterised in that** it includes a step (52) cf searching for a file stored on a server of a communication network if the object of the message includes a hyperlink pointing to that file.

7. A method according to claim 6 of launching a processing operator, **characterised in that** it includes a step of reading the file stored on a server of a communication network in streaming mode.

8. A method according to claim 6 of launching a processing application, **characterised in that** it includes a step of downloading the file stored on a server of a communication network.

9. A method according to any one of claims 1 to 5 of launching a processing application, **characterised in that** it comprises a step (52) of searching for a file stored in a memory (4) of the germinal (2) if the object of the message includes a local access path pointing to that file.

10. A telecommunication terminal adapted to receive a message containing an object of a given type, the terminal (2) including operators (8, 10, 12) for processing multimedia a messages end an MMS client module (14) that includes means (20) for identifying a processing operator (8, 10, 12) adapted to process said object as a function of the type thereof and means for transmission of that object to the identified processing operator to launch the processing thereof, which terminal is **characterised in that**:
- the identified processing operator (8, 10, 12) includes means for transmission of an acknowledgement message containing an indication of acceptance or non-acceptance of processing, and
- the terminal (2) includes a module (16) for launching processing operators including means for transmission of information concerning the object to the identified processing operator to generate a code for invoking an operation for processing that object.

11. A telecommunication terminal according to claim 10, **characterised in that** it includes storage means (4) adapted to store a message containing an object of the following type:
- a URI address pointing to multimedia files stored on a communication network, and/or
- an address pointing to multimedia files stored in the storage means (4) of the terminal.

12. A telecommunication terminal according to either claim 10 or claim 11, **characterised in that** it includes storage means (4) adapted to store a message containing an object of the application or executable code type.

13. A computer program including instructions for executing the steps of the method according to any one of claims 1 to 9 of launching a processing operator when the program is executed on a computer.
